# EUROPEAN PATENT APPLICATION

(11) **EP 4 425 819 A1**
(43) Date of publication of application: **04.09.2024**
(21) Application number: 23159125.6
(22) Date of filing: 28.02.2023
(51) Int. Cl.: H04L 9/06, H04L 9/08

(54) **A SECURE AND PERFORMANT LONG DISTANCE QUANTUM KEY DISTRIBUTION, QKD, SYSTEM**

(71) Applicant: Deutsche Telekom AG, 53113 Bonn (DE)
(72) Inventor: GUNKEL, Matthias, 64291 Darmstadt (DE); WISSEL, Felix, 64372 Ober-Ramstadt (DE); NIKIFOROV, Oleg, 55122 Mainz (DE)
(74) Representative: RDL Patentanwälte PartG mbB

(57) **Abstract**

A cryptographic node for a quantum key distribution, QKD, system, comprising an encryptor for encrypting or decrypting digital payload data using a plurality of quantum encryption keys and a trusted node, TN, for providing quantum encryption keys at a first key rate, a quantum key distribution system, a method for encrypting or decrypting digital payload data and a method for transmitting encrypted digital payload data.

## Description

The invention relates to a cryptographic unit for a terminal node of a quantum key distribution, QKD, system which comprises a trusted node, TN, for providing quantum encryption keys at a first key rate. The invention further relates to a terminal node of a quantum key distribution system, a quantum key distribution system, a method for providing a plurality of quantum encryption nodes and a method for transmitting encrypted digital payload data.

Cryptographic units as specified above are known and form part of terminal nodes of quantum key distribution systems. A quantum key distribution system comprises a first terminal node and a second terminal node and is used for transmitting encrypted digital payload data between the first terminal node and the second terminal node. In detail, the first terminal node encrypts the digital payload data and sends the encrypted digital payload data, and the second terminal node receives the encrypted digital payload data and decrypts the digital payload data, and vice versa.

The cryptographic unit comprises a trusted node which provides quantum keys to be used for encrypting or decrypting the digital payload data. The quantum keys used for encrypting or decrypting the digital payload data are called quantum encryption keys herein. The term "quantum" in "quantum key" indicates that the key is provided quantum-physically by the trusted node, i.e. generated and distributed to the first terminal node and the second terminal node by means of quantum physics.

The quantum-physical generation and distribution of the quantum encryption keys is very secure but limits a spatial distance between the first terminal node and the second terminal node. The quantum key distribution system, therefore, may comprise one or more than one intermediate node arranged in a chain between the first terminal node and the second terminal node for increasing the spatial distance of the terminal nodes. Each intermediate node also comprises a trusted node. The trusted node forwards the quantum encryption key by transforming the quantum encryption key into a digital encryption key and the digital encryption key back into a quantum encryption key.

However, each trusted node of an intermediate node of the quantum key distribution system can be physically and/or logically attacked not least because the quantum encryption key is digitized during the forwarding procedure which allows the digital encryption key to be read unnoticeably. The more increases the spatial distance of the terminal nodes, i.e. the number of required intermediate nodes, the more decreases a security of the quantum key distribution system.

It is, therefore, an object of the invention to provide a cryptographic unit allowing for a secure and long distance quantum key distribution system without any substantial loss of performance. Further objects of the invention are providing a terminal node for a quantum key distribution system and a quantum key distribution system and suggesting a method for providing quantum encryption keys and a method for transmitting encrypted payload data.

One aspect of the invention is a cryptographic unit for a terminal node of a quantum key distribution, QKD, system, comprising a trusted node, TN, for providing quantum encryption keys at a first key rate. The first key rate has an order of magnitude in a range from kbit/s to Mbit/s which allows for a high rate of provided quantum encryption keys.

According to the invention, the cryptographic unit further comprises a key derivation function, KDF, for collecting quantum encryption keys, transforming the collected quantum encryption keys and providing the transformed quantum encryption keys at a second key rate, and a quantum repeater, QR, for providing the key derivation function with a quantum transformation key defining a transformation by the key derivation function at a third key rate substantially lower than the first key rate. The quantum repeater provides quantum keys to be used for transforming the quantum encryption keys. The quantum keys used for transforming the quantum encryption keys are called quantum transformation keys herein.

The transformation may comprise any operation which modifies the collected quantum encryption keys, e.g., scrambling the collected quantum encryption keys, i.e. just changing an order of the collected quantum encryption keys, encrypting the collected quantum encryption keys and/or at least partially concatenating the collected quantum encryption keys and dividing differently the concatenated quantum encryption keys to name only a few options.

The second key rate is generally different from both the first key rate and the third key rate an depends on an operation of the key derivation function. The second key rate may equal the first key rate when the key derivation function only scrambles the collected quantum encryption keys as scrambling the collected quantum encryption keys does not alter a number of the collected quantum encryption keys. The second key rate may be lower than the first key rate when the key derivation function provides transformed quantum encryption keys longer than the quantum encryption keys provided by the trusted node. The second key rate may be higher than the first key rate when the key derivation function provides transformed quantum encryption keys shorter than the quantum encryption keys provided by the trusted node.

Of course, the cryptographic unit may comprise two or more than two quantum repeaters each providing a quantum transformation key wherein the corresponding key derivation function transforms the collected quantum encryption keys dependent on each provided quantum transformation key.

The second key rate has an order of magnitude of about bit/s which allows for a low rate of provided quantum transformation keys. The relatively low rate of quantum transformation keys does not cause a substantial loss of performance of the cryptographic unit and, hence, of a quantum key distribution system comprising terminal nodes with the inventive cryptographic units when about 10³ to 10⁶ quantum encryption keys are collected before being transformed. In other words, a single quantum transformation key is sufficient for about 10³ to 10⁶ quantum encryption keys.

The quantum repeater does not digitize the quantum transformation key during a forwarding procedure which reliably prevents the quantum transformation key from being read unnoticeably. Even if an attacker reads a digitized quantum encryption key from a trusted node without being noticed the attacker can never know how the read digitized quantum encryption key is transformed without being noticed as reading the quantum transformation key from the quantum repeater is necessarily noticed. Accordingly, a security of the cryptographic unit is not adversely affected by any trusted node.

The key derivation function comprises an advanced encryption standard, AES, function or a cryptographic hash function, particularly SHA-256. The advanced encryption standard ensures an output of the AES function to strongly change for a small change of an input of the AES function. The same indeed holds for cryptographic hash functions which are easier to implement. However, hash functions generally suffer from a slight loss of information.

Another aspect of the invention is a terminal node for a quantum key distribution system, comprising an encryptor for encrypting or decrypting digital payload data using a plurality of quantum encryption keys. The encryptor is configured for applying the quantum encryption keys to the digital payload data. Each quantum encryption key may be used for encrypting the digital payload data or decrypting the digital payload data.

According to the invention, the terminal node comprises a cryptographic unit according to an embodiment of the invention for providing transformed quantum encryption keys as the plurality of quantum encryption keys. Due to the cryptographic unit, the terminal node allows for a secure and long distance quantum key distribution system without any substantial loss of performance as compared with known quantum key distribution systems.

A third aspect of the invention is a quantum key distribution, QKD, system, comprising a first terminal node, Alice, and a second terminal node, Bob, connected to each other wherein both the first terminal node and the second terminal node comprise a terminal node. The quantum key distribution system provides an end-to-end, E2E, encryption of digital payload data. The quantum key distribution system may comprise glass fibers connecting the terminal nodes.

According to the invention, the quantum key distribution function comprises terminal nodes according to an embodiment of the invention as the first terminal node and the second terminal node, the encryptors of the first and second terminal nodes are connected for transmitting encrypted digital payload data, the trusted nodes of the first and the second terminal nodes are connected for cooperatively providing quantum encryption keys and the quantum repeaters of the first and the second terminal nodes are connected for cooperatively providing quantum transformation keys. Each terminal node comprises a cryptographic unit according to the invention. Each pair of corresponding components may be connected by means of a glass fiber. The inventive quantum distribution system allows for a secure and long distance E2E encryption without any substantial loss of performance as compared with known quantum key distribution systems.

Preferably, the key derivation function of the first terminal node and the key derivation function of the second terminal node are identical. Identity of the key derivation function is to be understood as implementing the same transformation algorithm. In other words, the key derivation functions are different instances but transform identically when they are provided with the same quantum transformation key.

The quantum key distribution system may further comprise an intermediate node with a trusted node and/or a quantum repeater, wherein the trusted node is connected to the trusted node of the first terminal node or a trusted node of a first intermediate node and to a trusted node of a second intermediate node or the trusted node of the second terminal node and the quantum repeater is connected to the quantum repeater of the first terminal node or a quantum repeater of the first intermediate node and to a quantum repeater of the second intermediate node or the quantum repeater of the second terminal node. The intermediate node allows for a larger spatial distance between the first terminal node and the second terminal node. The trusted node and the quantum repeater of the intermediate node correspond to the trusted node and the quantum repeater of each terminal node, respectively. In other words, the intermediate node may comprise the trusted node only or the quantum repeater only or both the trusted node and the quantum repeater.

Advantageously, the quantum key distribution system comprises a plurality of intermediate nodes. Each additional intermediate node increases a possible spatial distance of the terminal nodes without adversely affecting a security or a performance of the quantum key distribution system.

A fourth aspect of the invention is a method for providing a plurality of quantum encryption keys, wherein a trusted node, TN, of a cryptographic unit provides quantum encryption keys at a first key rate. The trusted node provides the quantum encryption keys quantum-physically, i.e. generates the quantum encryption keys by means of quantum physics. The quantum encryption keys provided by the trusted node may be used for encrypting or decrypting digital payload data.

According to the invention, a key derivation function, KDF, of the cryptographic unit collects the provided quantum encryption keys, transforms the collected quantum encryption keys and provides the transformed quantum encryption keys as the plurality of quantum encryption keys at a second key rate, and a quantum repeater, QR, of the cryptographic unit provides the key derivation function with a quantum transformation key defining a transformation by the key derivation function at a third key rate substantially lower than the first key rate. The key derivation function collects and transforms the quantum encryption keys provided by the trusted node dependent on the quantum transformation key provided by the quantum repeater. The quantum transformation key cannot be read without the reading of the quantum transformation key being noticed. The quantum repeater and the key derivation function cooperate for increasing a security of the quantum encryption keys being used for encrypting or decrypting digital payload data without any substantial loss of performance.

Preferably, the method is carried out by a trusted node, a key derivation function and a quantum repeater of a cryptographic unit according to an embodiment of the invention. The method inherits the positive effects of the inventive cryptographic unit.

Each quantum encryption key or quantum transformation key may be provided as a chunk having 256 bits. Chunks of 256 bits are common E2E encryption keys. The quantum transformation keys may also have a length of 256 bits but need not.

A fifth aspect of the invention is a method for transmitting encrypted digital payload data, wherein an encryptor of a first terminal node, Alice, of a quantum key distribution system and an encryptor of a second terminal node, Bob, of the quantum key distribution system encrypt digital payload data using a plurality of quantum encryption keys and transmit the encrypted digital payload data, and a trusted node of a cryptographic unit of the first terminal node and a trusted node of a cryptographic unit of the second terminal node cooperatively provide quantum encryption keys at a first key rate. The first and second terminal nodes belong to a quantum key distribution system. The cooperation of the respective trusted nodes ensures the respective quantum encryption keys used by the cryptographic unit of the first terminal node and the cryptographic unit of the second terminal node are provided synchronously and identically.

According to the invention, a key derivation function of the first cryptographic unit and a key derivation function of the second cryptographic unit collect the provided quantum encryption keys, transform the collected quantum encryption keys and provide the respective encryptor with the transformed quantum encryption keys as the plurality of quantum encryption keys at a second key rate; and a quantum repeater of the first cryptographic unit and a quantum repeater of the second cryptographic unit cooperatively provide the respective key derivation function with quantum transformation keys at a third key rate substantially lower than the first key rate. The cooperation of the quantum repeaters ensures the respective quantum transformation keys used by the cryptographic unit of the first terminal node and the cryptographic unit of the second terminal node are provided synchronously and identically. The cooperating quantum repeaters cause any reading of a quantum transformation key to be noticed which increases a security of the E2E encryption without any loss of performance of the quantum distribution system.

An intermediate node connected to the first terminal node and/or the second terminal node may forward the transmitted encrypted digital payload data, a trusted node of the intermediate node synchronizes the provided quantum encryption keys and a quantum repeater of the intermediate node synchronizes the provided quantum transformation keys. The intermediate node allows the encrypted digital payload data to be securely transmitted over a larger spatial distance without any substantial loss of performance. The operations of the trusted node and the quantum repeater of the intermediate node correspond to the operations of the trusted node and the quantum repeater of each terminal node, respectively.

Preferably, synchronizing the provided quantum transformation keys comprises entangling photons. Entanglement of photons is a quantum-physical state of two interdependent photons separated in space.

Advantageously, synchronizing a provided quantum encryption key comprises providing a first quantum encryption key in cooperation with the first cryptographic unit and providing a second quantum encryption key in cooperation with the second cryptographic unit, selecting a quantum encryption key from the first and second quantum encryption keys and XORing the selected quantum encryption key with the remaining quantum encryption key, transmitting the XORed quantum encryption key to the cryptographic unit providing the remaining quantum encryption key, and XORing the transmitted XORed quantum encryption key with the remaining quantum encryption key. The XOR, exclusive OR, operation is a self-inverse logical operation, i.e. identically applying XOR twice to a bit sequence results in the same bit sequence. The cryptographic unit, of course, knows the remaining quantum encryption key and, hence, is able to XOR the transmitted XORed quantum encryption key again with the remaining quantum encryption key. The synchronization works equally well for either selection from the first and second quantum encryption keys.

It is noticed, that the terminal nodes have to absolutely rely on the intermediate node. While the synchronization provided by the trusted node is easy and elegant the XORed quantum encryption keys cause a significant quantum key overhead to be transmitted.

Preferably, a plurality of connected intermediate nodes forwards the encrypted digital payload data, synchronizes the provided the quantum encryption keys and synchronizes the provided quantum transformation keys. Each intermediate node allows the encrypted digital payload data to be securely transmitted over a larger spatial distance without adversely affecting a security or a performance of the quantum key distribution system.

An essential advantage of the inventive cryptographic unit is that a quantum key distribution system with terminal nodes comprising the cryptographic unit is secure and allows for a long distance between the terminal nodes without any substantial loss of performance.

Further advantages and configurations of the invention become apparent from the following description and the enclosed drawings.

It shall be understood that the features described previously and to be described subsequently may be used not only in the indicated combinations but also in different combinations or on their own without leaving the scope of the present invention.

The invention is described in detail by means of an exemplary embodiment and with reference to the drawings.

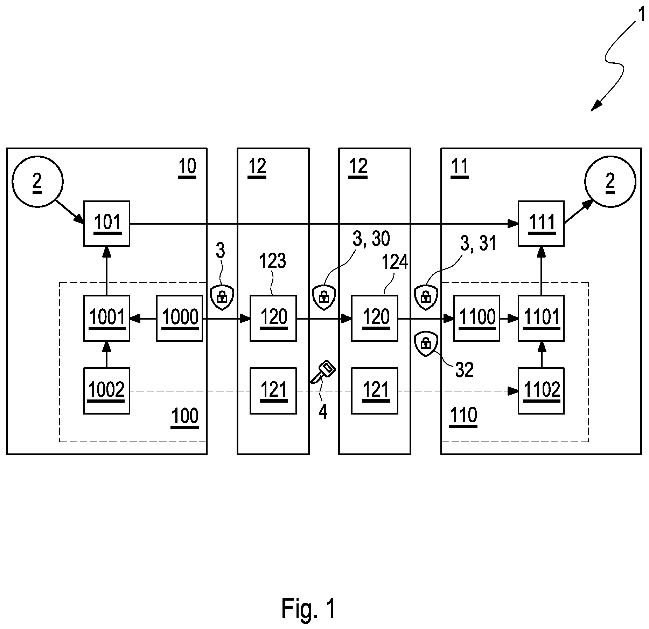

- Fig. 1: schematically shows a quantum key distribution system according to an embodiment of the invention.

Fig. 1 schematically shows a quantum key distribution system 1 according to an embodiment of the invention. The quantum key distribution, QKD, system 1, comprises a first terminal node 10, Alice, and a second terminal node 11, Bob, connected to each other. Both the first terminal node 10 and the second terminal node 11 comprise a terminal node 10, 11 according to an embodiment of the invention for the quantum key distribution system 1.

Each terminal node 10, 11 comprises an encryptor 101, 111 for encrypting or decrypting digital payload data 2 using a plurality of quantum encryption keys 3. The encryptors 101, 111 of the first and second terminal nodes 10, 11 are connected for transmitting encrypted digital payload data 2.

Further, each terminal node 10, 11 comprises a cryptographic unit 100, 110 according to an embodiment of the invention for the terminal node 10, 11 of the quantum key distribution system and for providing transformed quantum encryption keys 3 as the plurality of quantum encryption keys 3.

The cryptographic unit 100, 110 comprises a trusted node 1000, 1100, TN, for providing quantum encryption keys 3 at a first key rate. The trusted nodes 1000, 1100 of the first and the second terminal nodes 10, 11 are connected for cooperatively providing quantum encryption keys 3.

The cryptographic unit 100, 110 further comprises a key derivation function 1001, 1101, KDF, for collecting quantum encryption keys 3, transforming the collected quantum encryption keys 3 and providing the transformed quantum encryption keys 3 at a second key rate. The quantum repeaters 1002, 1102 of the first and the second terminal nodes 10, 11 are connected for cooperatively providing quantum transformation keys 4.

The key derivation function 1001, 1101 exemplarily comprises an advanced encryption standard, AES, function or a cryptographic hash function, particularly SHA-256. The key derivation function 1001 of the first terminal node 10 and the key derivation function 1101 of the second terminal node 11 are preferably identical.

The cryptographic unit 100, 110 also comprises a quantum repeater 1002, 1102, QR, for providing the key derivation function 1001, 1101 with a quantum transformation key 4 defining a transformation by the key derivation function 1001, 1101 at a third key rate substantially lower than the first key rate.

The quantum key distribution system 1 may further comprise an intermediate node 12 with a trusted node 120 and/or a quantum repeater 121. The trusted node 120 may be connected to the trusted node 1000 of the first terminal node 10 or a trusted node 120 of a first intermediate node 123 and to a trusted node 120 of a second intermediate node 124 or the trusted node 1100 of the second terminal node 11.

The quantum repeater 121 may be connected to the quantum repeater 1002 of the first terminal node 10 or a quantum repeater 121 of the first intermediate node 123 and to a quantum repeater 121 of the second intermediate node 124 or the quantum repeater 1102 of the second terminal node 11. Particularly, the quantum key distribution system 1 may comprise a plurality of intermediate nodes.

The quantum distribution system 1 is operated for transmitting the encrypted digital payload data 2 in a method according to an embodiment of the invention as follows.

The encryptor 101 of a first terminal node 10, Alice, of the quantum key distribution system 1 and the encryptor 111 of the second terminal node 11, Bob, of the quantum key distribution system 1 encrypt digital payload data 2 using a plurality of quantum encryption keys 3 and transmit the encrypted digital payload data 2.

The plurality of quantum encryption keys 3 is provided in a method according to an embodiment of the invention as follows. The method is preferably carried out by the trusted node 1000, 1100, the key derivation function 1001, 1101 and a quantum repeater 1002, 1102 of the inventive cryptographic unit 100, 110.

The trusted node 1000, 1100, TN, of each cryptographic unit 100, 110 provides quantum encryption keys 3 at the first key rate. The key derivation function 1001, 1101, KDF, of each cryptographic unit 100, 110 collects the provided quantum encryption keys 3, transforms the collected quantum encryption keys 3 and provides the transformed quantum encryption keys 3 as the plurality of quantum encryption keys 3 at the second key rate. The quantum repeater 1002, 1102, QR, of each cryptographic unit 100, 110 provides the key derivation function 1001, 1101 with a quantum transformation key 4 defining a transformation by the key derivation function 1001, 1101 at the third key rate substantially lower than the first key rate.

Each quantum encryption key 3 or quantum transformation key 4 is exemplarily provided as a chunk having 256 bits.

The trusted node 1000 of the cryptographic unit 100 of the first terminal node 10 and the trusted node 1100 of the cryptographic unit 110 of the second terminal node 11 cooperatively provide quantum encryption keys 3 at a first key rate.

The key derivation function 1001 of the first cryptographic unit 100 and the key derivation function 1101 of the second cryptographic unit 110 collect the provided quantum encryption keys 3, transform the collected quantum encryption keys 3 and provide the respective encryptor 101, 111 with the transformed quantum encryption keys 3 as the plurality of quantum encryption keys 3 at a second key rate.

The quantum repeater 1002 of the first cryptographic unit 100 and the quantum repeater 1102 of the second cryptographic unit 110 cooperatively provide the respective key derivation function 1001, 1101 with quantum transformation keys 4 at the third key rate substantially lower than the first key rate.

The intermediate node 12 connected to the first terminal node 10 and/or the second terminal node 11 forwards the transmitted encrypted digital payload data 2. The trusted node 120 of the intermediate node 12 synchronizes the provided quantum encryption keys 3 and the quantum repeater 121 of the intermediate node 12 synchronizes the provided quantum transformation keys 4. Preferably, synchronizing the provided quantum transformation keys 4 comprises entangling photons.

Synchronizing a provided quantum encryption key 3 may comprise providing a first quantum encryption key 30 in cooperation with the first cryptographic unit 100 and providing a second quantum encryption key 31 in cooperation with the second cryptographic unit 110, selecting a quantum encryption key 30, 31 from the first and second quantum encryption keys 30, 31 and XORing the selected quantum encryption key 30, 31 with the remaining quantum encryption key 31, 30, transmitting the XORed quantum encryption key 30, 31 to the cryptographic unit 100, 110 providing the remaining quantum encryption key 31, 30, and XORing the transmitted XORed quantum encryption key 30, 31 with the remaining quantum encryption key 31, 30.

Particularly, the plurality of connected intermediate nodes 12 may forward the encrypted digital payload data 2, synchronize the provided quantum encryption keys 3 and synchronize the provided quantum transformation keys 4.

### Reference Numerals

- 1: quantum key distribution, QKD, system
- 10: first terminal node, Alice
- 100: cryptographic unit
- 1000: trusted node, TN
- 1001: key derivation function, KDF
- 1002: quantum repeater, QR
- 101: encryptor
- 11: second terminal node, Bob
- 110: cryptographic unit
- 1100: trusted node, TN
- 1101: key derivation function, KDF
- 1102: quantum repeater, QR
- 111: encryptor
- 12: intermediate node
- 120: trusted node, TN
- 121: quantum repeater, QR
- 123: first intermediate node
- 124: second intermediate node
- 2: digital payload data
- 3: quantum encryption key
- 30: first quantum encryption key
- 31: second quantum encryption key
- 32: XORed quantum encryption key
- 4: quantum transformation key

## Claims

1. A cryptographic unit (100, 110) for a terminal node (10, 11) of a quantum key distribution, QKD, system (1), comprising a trusted node (1000, 1100), TN, for providing quantum encryption keys (3) at a first key rate, and further comprising a key derivation function (1001, 1101), KDF, for collecting quantum encryption keys (3), transforming the collected quantum encryption keys (3) and providing the transformed quantum encryption keys (3) at a second key rate, and a quantum repeater (1002, 1102), QR, for providing the key derivation function (1001, 1101) with a quantum transformation key (4) defining a transformation by the key derivation function (1001, 1101) at a third key rate substantially lower than the first key rate.

2. The cryptographic unit according to claim 1, wherein the key derivation function (1001, 1101) comprises an advanced encryption standard, AES, function or a cryptographic hash function, particularly SHA-256.

3. A terminal node (10, 11) for a quantum key distribution system (1), comprising an encryptor (101, 111) for encrypting or decrypting digital payload data (2) using a plurality of quantum encryption keys (3) and a cryptographic unit (100, 110) according to claim 1 or 2 for providing transformed quantum encryption keys (3) as the plurality of quantum encryption keys (3).

4. A quantum key distribution, QKD, system (1), comprising a first terminal node (10), Alice, and a second terminal node (11), Bob, connected to each other wherein both the first terminal node (10) and the second terminal node (11) comprise a terminal node (10, 11) according to claim 3, the encryptors (101, 111) of the first and second terminal nodes (10, 11) are connected for transmitting encrypted digital payload data (2), the trusted nodes (1000, 1100) of the first and the second terminal nodes (10, 11) are connected for cooperatively providing quantum encryption keys (3) and the quantum repeaters (1002, 1102) of the first and the second terminal nodes (10, 11) are connected for cooperatively providing quantum transformation keys (4).

5. The quantum key distribution system according to claim 4, wherein the key derivation function (1001) of the first terminal node (10) and the key derivation function (1101) of the second terminal node (11) are identical.

6. The quantum key distribution system according to claim 4 or 5, further comprising an intermediate node (12) with a trusted node (120) and/or a quantum repeater (121), wherein the trusted node (120) is connected to the trusted node (1000) of the first terminal node (10) or a trusted node (120) of a first intermediate node (123) and to a trusted node (120) of a second intermediate node (124) or the trusted node (1100) of the second terminal node (11) and the quantum repeater (121) is connected to the quantum repeater (1002) of the first terminal node (10) or a quantum repeater (121) of the first intermediate node (123) and to a quantum repeater (121) of the second intermediate node (124) or the quantum repeater (1102) of the second terminal node (11).

7. The quantum key distribution system according to claim 6, comprising a plurality of intermediate nodes.

8. A method for providing a plurality of quantum encryption keys (3), wherein
- a trusted node (1000, 1100), TN, of a cryptographic unit (100, 110) provides quantum encryption keys (3) at a first key rate;
- a key derivation function (1001, 1101), KDF, of the cryptographic unit (100, 110) collects the provided quantum encryption keys (3), transforms the collected quantum encryption keys (3) and provides the transformed quantum encryption keys (3) as the plurality of quantum encryption keys (3) at a second key rate;
- a quantum repeater (1002, 1102), QR, of the cryptographic unit (100, 110) provides the key derivation function (1001, 1101) with a quantum transformation key (4) defining a transformation by the key derivation function (1001, 1101) at a third key rate substantially lower than the first key rate.

9. The method according to claim 8, being carried out by a trusted node (1000, 1100), a key derivation function (1001, 1101) and a quantum repeater (1002, 1102) of a cryptographic unit (100, 110) according to claim 1 or 2.

10. The method according to claim 8 or 9, wherein each quantum encryption key (3) or quantum transformation key (4) is provided as a chunk having 256 bits.

11. A method for transmitting encrypted digital payload data (2), wherein
- an encryptor (101) of a first terminal node (10), Alice, of a quantum key distribution system (1) and an encryptor (111) of a second terminal node (11), Bob, of the quantum key distribution system (1) encrypt digital payload data (2) using a plurality of quantum encryption keys (3) and transmit the encrypted digital payload data (2);
- a trusted node (1000) of a cryptographic unit (100) of the first terminal node (10) and a trusted node (1100) of a cryptographic unit (110) of the second terminal node (11) cooperatively provide quantum encryption keys (3) at a first key rate; and
- a key derivation function (1001) of the first cryptographic unit (100) and a key derivation function (1101) of the second cryptographic unit (110) collect the provided quantum encryption keys (3), transform the collected quantum encryption keys (3) and provide the respective encryptor (101, 111) with the transformed quantum encryption keys (3) as the plurality of quantum encryption keys (3) at a second key rate;
- a quantum repeater (1002) of the first cryptographic unit (100) and a quantum repeater (1102) of the second cryptographic unit (110) cooperatively provide the respective key derivation function (1001, 1101) with quantum transformation keys (4) at a third key rate substantially lower than the first key rate.

12. The method according to claim 11, wherein an intermediate node (12) connected to the first terminal node (10) and/or the second terminal node (11) forwards the transmitted encrypted digital payload data (2), a trusted node (120) of the intermediate node (12) synchronizes the provided quantum encryption keys (3) and a quantum repeater (121) of the intermediate node (12) synchronizes the provided quantum transformation keys (4).

13. The method according to claim 12, wherein synchronizing the provided quantum transformation keys (4) comprises entangling photons.

14. The method according to claim 12 or 13, wherein synchronizing a provided quantum encryption key (3) comprises
- providing a first quantum encryption key (30) in cooperation with the first cryptographic unit (100) and providing a second quantum encryption key (31) in cooperation with the second cryptographic unit (110);
- selecting a quantum encryption key (30, 31) from the first and second quantum encryption keys (30, 31) and XORing the selected quantum encryption key (30, 31) with the remaining quantum encryption key (31, 30);
- transmitting the XORed quantum encryption key (30, 31) to the cryptographic unit (100, 110) providing the remaining quantum encryption key (31, 30);
- XORing the transmitted XORed quantum encryption key (30, 31) with the remaining quantum encryption key (31, 30).

15. The method according to one of claims 11 to 14, wherein a plurality of connected intermediate nodes (12) forwards the encrypted digital payload data (2), synchronizes the provided quantum encryption keys (3) and synchronizes the provided quantum transformation keys (4).

## Amended claims

### Amended claims in accordance with Rule 137(2) EPC.

1. A cryptographic unit (100, 110) for a terminal node (10, 11) of a quantum key distribution, QKD, system (1), comprising a trusted node (1000, 1100), TN, for providing quantum encryption keys (3) at a first key rate, and further comprising a key derivation function (1001, 1101), KDF, for collecting the provided quantum encryption keys (3), transforming the collected quantum encryption keys (3) dependent on quantum transformation keys (4), each quantum transformation key (4) defining a transformation by the key derivation function (1001, 1101), and providing the transformed quantum encryption keys (3) at a second key rate, and a quantum repeater (1002, 1102), QR, for providing the key derivation function (1001, 1101) with the quantum transformation keys (4) at a third key rate substantially lower than the first key rate.

2. The cryptographic unit according to claim 1, wherein the key derivation function (1001, 1101) comprises an advanced encryption standard, AES, function or a cryptographic hash function, particularly SHA-256.

3. A terminal node (10, 11) for a quantum key distribution system (1), comprising an encryptor (101, 111) for encrypting or decrypting digital payload data (2) using a plurality of quantum encryption keys (3) and a cryptographic unit (100, 110) according to claim 1 or 2 for providing transformed quantum encryption keys (3) as the plurality of quantum encryption keys (3).

4. A quantum key distribution, QKD, system (1), comprising a first terminal node (10), Alice, and a second terminal node (11), Bob, connected to each other wherein both the first terminal node (10) and the second terminal node (11) comprise a terminal node (10, 11) according to claim 3, the encryptors (101, 111) of the first and second terminal nodes (10, 11) are connected for transmitting encrypted digital payload data (2), the trusted nodes (1000, 1100) of the first and the second terminal nodes (10, 11) are connected for cooperatively providing quantum encryption keys (3) and the quantum repeaters (1002, 1102) of the first and the second terminal nodes (10, 11) are connected for cooperatively providing quantum transformation keys (4).

5. The quantum key distribution system according to claim 4, wherein the key derivation function (1001) of the first terminal node (10) and the key derivation function (1101) of the second terminal node (11) are identical.

6. The quantum key distribution system according to claim 4 or 5, further comprising an intermediate node (12) with a trusted node (120) and/or a quantum repeater (121), wherein the trusted node (120) is connected to the trusted node (1000) of the first terminal node (10) or a trusted node (120) of a first intermediate node (123) and to a trusted node (120) of a second intermediate node (124) or the trusted node (1100) of the second terminal node (11) and the quantum repeater (121) is connected to the quantum repeater (1002) of the first terminal node (10) or a quantum repeater (121) of the first intermediate node (123) and to a quantum repeater (121) of the second intermediate node (124) or the quantum repeater (1102) of the second terminal node (11).

7. The quantum key distribution system according to claim 6, comprising a plurality of intermediate nodes.

8. A method for providing a plurality of quantum encryption keys (3), wherein
- a trusted node (1000, 1100), TN, of a cryptographic unit (100, 110) provides quantum encryption keys (3) at a first key rate;
- a key derivation function (1001, 1101), KDF, of the cryptographic unit (100, 110) collects the provided quantum encryption keys (3), transforms the collected quantum encryption keys (3) dependent on quantum transformation keys (4), each quantum transformation key (4) defining a transformation by the key derivation function (1001, 1101), and provides the transformed quantum encryption keys (3) as the plurality of quantum encryption keys (3) at a second key rate;
- a quantum repeater (1002, 1102), QR, of the cryptographic unit (100, 110) provides the key derivation function (1001, 1101) with the quantum transformation keys (4) at a third key rate substantially lower than the first key rate.

9. The method according to claim 8, being carried out by a trusted node (1000, 1100), a key derivation function (1001, 1101) and a quantum repeater (1002, 1102) of a cryptographic unit (100, 110) according to claim 1 or 2.

10. The method according to claim 8 or 9, wherein each quantum encryption key (3) or quantum transformation key (4) is provided as a chunk having 256 bits.

11. A method for transmitting encrypted digital payload data (2), wherein
- an encryptor (101) of a first terminal node (10), Alice, of a quantum key distribution system (1) and an encryptor (111) of a second terminal node (11), Bob, of the quantum key distribution system (1) encrypt digital payload data (2) using a plurality of quantum encryption keys (3) and transmit the encrypted digital payload data (2);
- a trusted node (1000) of a cryptographic unit (100) of the first terminal node (10) and a trusted node (1100) of a cryptographic unit (110) of the second terminal node (11) cooperatively provide quantum encryption keys (3) at a first key rate; and
- a key derivation function (1001) of the first cryptographic unit (100) and a key derivation function (1101) of the second cryptographic unit (110) collect the provided quantum encryption keys (3), transform the collected quantum encryption keys (3) and provide the respective encryptor (101, 111) with the transformed quantum encryption keys (3) as the plurality of quantum encryption keys (3) at a second key rate;
- a quantum repeater (1002) of the first cryptographic unit (100) and a quantum repeater (1102) of the second cryptographic unit (110) cooperatively provide the respective key derivation function (1001, 1101) with quantum transformation keys (4) at a third key rate substantially lower than the first key rate.

12. The method according to claim 11, wherein an intermediate node (12) connected to the first terminal node (10) and/or the second terminal node (11) forwards the transmitted encrypted digital payload data (2), a trusted node (120) of the intermediate node (12) synchronizes the provided quantum encryption keys (3) and a quantum repeater (121) of the intermediate node (12) synchronizes the provided quantum transformation keys (4).

13. The method according to claim 12, wherein synchronizing the provided quantum transformation keys (4) comprises entangling photons.

14. The method according to claim 12 or 13, wherein synchronizing a provided quantum encryption key (3) comprises
- providing a first quantum encryption key (30) in cooperation with the first cryptographic unit (100) and providing a second quantum encryption key (31) in cooperation with the second cryptographic unit (110);
- selecting a quantum encryption key (30, 31) from the first and second quantum encryption keys (30, 31) and XORing the selected quantum encryption key (30, 31) with the remaining quantum encryption key (31, 30);
- transmitting the XORed quantum encryption key (30, 31) to the cryptographic unit (100, 110) providing the remaining quantum encryption key (31, 30);
- XORing the transmitted XORed quantum encryption key (30, 31) with the remaining quantum encryption key (31, 30).

15. The method according to one of claims 11 to 14, wherein a plurality of connected intermediate nodes (12) forwards the encrypted digital payload data (2), synchronizes the provided quantum encryption keys (3) and synchronizes the provided quantum transformation keys (4).
